# EUROPÄISCHE PATENTSCHRIFT

(11) **EP 3 964 461 B1**
(45) Veröffentlichungstag und Bekanntmachung des Hinweises auf die Patenterteilung: **03.01.2024**
(21) Anmeldenummer: 21174986.6
(22) Anmeldetag: 20.05.2021
(51) Int. Cl.: B65G 47/86

(54) **KLAMMERVORRICHTUNG ZUM HALTEN EINES BEHÄLTERS UND BEHÄLTERBEHANDLUNGSVORRICHTUNG**
CLAMP DEVICE FOR HOLDING A CONTAINER AND CONTAINER TREATMENT DEVICE
DISPOSITIF DE SERRAGE PERMETTANT DE MAINTENIR UN RÉCIPIENT ET DISPOSITIF DE MANUTENTION DE RÉCIPIENTS

(30) Priorität: 20.05.2020 DE 102020113604
(43) Veröffentlichungstag der Anmeldung: 09.03.2022
(60) Teilanmeldung: 22158511.0
(73) Patentinhaber: KRONES AG, 93073 Neutraubling (DE)
(72) Erfinder: Landler, Bruno, 93073 Neutraubling (DE); Leidel, Marco, 93073 Neutraubling (DE); Brandl, Christoph, 93073 Neutraubling (DE)
(74) Vertreter: Nordmeyer, Philipp Werner

(56) Entgegenhaltungen:
- EP-A1- 0 939 044
- EP-A1- 2 352 693
- WO-A1-2009/118579
- WO-A1-2011/047808
- DE-A1-102018 104 112
- US-B1- 8 672 376

## Beschreibung

### Technisches Gebiet

Die vorliegende Erfindung betrifft eine Klammervorrichtung zum Halten eines Behälters in einer Behälterbehandlungsvorrichtung, beispielsweise zum Halten eines Getränkebehälters in einem Halsabschnitt oder an einem Bauchabschnitt zum Transportieren durch die Behälterbehandlungsvorrichtung hindurch oder in Behandlungsabschnitten der Behälterbehandlungsvorrichtung, zur Übergabe von einem Behandlungsabschnitt an einen nachfolgenden Behandlungsabschnitt, sowie eine Behälterbehandlungsvorrichtung.

### Stand der Technik

Es ist bekannt, in Getränkeabfüllanlagen die jeweils zu befüllenden Behälter beziehungsweise bereits befüllte Behälter mittels Klammervorrichtungen zu halten und auf diese Weise durch die einzelnen Behandlungsstationen der Behälterbehandlungsvorrichtung zu transportieren. Dabei sind unterschiedliche Klammervorrichtungen bekannt, welche die jeweiligen zu behandelnden Behälter auf unterschiedliche Art und Weise halten.

So sind beispielsweise passive Klammervorrichtungen bekannt, welche lediglich durch das Einschieben des jeweiligen Behälters in die Klammervorrichtung elastisch vorgespannt werden und dann den jeweiligen Behälter halten. Aus der DE 10 2015 218 204 A1 ist eine solche Klammer zum Greifen von Behältern bekannt. Die Klammer weist dabei eine feste Position auf. Zum Greifen eines Behälters muss dieser in die Klammer gedrückt werden. Dabei werden die steifen Greifarme nach außen gespreizt, so dass der Behälter gegen die aufgrund des Spreizens der Klammer entstehende Schließkraft der Greifarme bewegt werden muss. Hierdurch wird der Behälter beim Einschieben mit einer hohen Kraft beaufschlagt, so dass solche Haltevorrichtungen zum Greifen beziehungsweise Halten fragiler und/oder leicht verformbarer sowie dünnwandiger Behälter nicht geeignet sind. Zumindest ist eine Neigung zum Verkratzen der Oberflächen der jeweiligen Behälter gegeben, so dass die Qualität der Behälter herabgesetzt sein kann.

Weiterhin bekannt sind aktive Klammervorrichtungen, bei welchen ein Öffnen und Schließen der jeweiligen Halteabschnitte der Klammervorrichtung mittels eines Aktuators aktiv durchgeführt wird. Solche aktiven Klammervorrichtungen dienen insbesondere dazu, eine sichere und schonende Übernahme der jeweiligen Behälter von einer vorhergehenden Klammervorrichtung zu ermöglichen oder eine ebenso sichere und behälterschonende Übergabe der Behälter an eine nachfolgende Klammervorrichtung zu gewährleisten. Insbesondere kann durch das aktive Öffnen und Schließen der jeweiligen Klammervorrichtung eine erhöhte Reibung an dem jeweiligen Behälter, welche beispielsweise zu einem Verkratzen des Behälters führen könnte, vermieden werden und andererseits kann eine vorgegebene Haltekraft beziehungsweise Klemmkraft eingestellt werden, welche innerhalb eines vorgegebenen Toleranzbereichs der Behälterdimension eingehalten werden kann. Solche aktiven Klammervorrichtungen setzen sich aus einer Vielzahl von Einzelteilen, beispielsweise Klammerarmen, Buchsen, Federelementen, Vorspannelementen und entsprechenden Verbindungselementen zum sicheren Verbinden der vorgenannten Teile, zusammen. Derart aufgebaute Klammervorrichtungen sind mithin aufwendig zu reinigen und weisen einen entsprechend hohen Fertigungsaufwand auf.

Aus der EP 0 939 044 A1 ist ein Flaschengreifer bekannt, bei welchem eine Greifvorrichtung vorgesehen ist, welche zwei Greifarme aufweist, die mittels eines Steuernockens in eine Halteposition oder eine Löseposition bringbar sind. Der Steuernocken wirkt mit einer an jedem Greifarm ausgebildeten Anlagefläche zusammen und die Anlagefläche ist als Bestandteil eines elastischen Kissens ausgebildet, welches an dem jeweiligen Greifarm angeordnet ist.

Um die Komplexität einer aktiven Klammervorrichtung zu reduzieren und gleichzeitig zu ermöglichen, dass die Klammerarme der Klammervorrichtung in einem Grundzustand eine vorgegebene Position aufweisen, beispielsweise eine geschlossene Position, ist es bekannt, Mittel an der Klammervorrichtung vorzusehen, welche auf die Klammerarme eine Vorspannung aufbringen, und so die Klammerarme in die vorgegebene Position vorzuspannen.

Aus der EP 2 143 674 A2 ist eine aktive Klammervorrichtung zum Halten von Behältern bekannt, bei welchen zwei Greifarme beziehungsweise Klammerarme mit separaten Magnetanordnungen in einer geöffneten Position gehalten werden. Die Klammerarme weisen nach hinten orientierte Schließhebel auf, welche mit einem dazwischen angeordneten Schließnocken zusammenwirken, um die Klammerarme aus der geöffneten Position in eine geschlossene Position zu bringen. Aus der DE 10 2017 129 506 A1 ist eine aktive Klammervorrichtung bekannt, welche anstelle der separaten Magnetanordnung ein bogenförmiges Vorspannelement aufweist.

Die DE 10 2005 014 838 A1 zeigt eine aktive Klammervorrichtung zum Halten von Gefäßen mit zwei Klammerarmen, die zum Öffnen und Schließen relativ zueinander beweglich sind. Um ein sicheres Halten der Gefäße zu ermöglichen, ist ein Greifarm der Klammer formstabil und der andere Greifarm formelastisch ausgebildet. Die Greifarme werden mittels daran angeordneter Magneten in eine geöffnete Position vorgespannt und mittels eines Steuernockens in die geschlossene Position geschwenkt.

Grundsätzlich sind bei herkömmlichen Klammervorrichtungen, welche eine Vorspannung der Klammerarme in eine vorgegebene Position umfassen, die Klammerarme jeweils um eine eigene Schwenkachse herum schwenkbar angeordnet. Mit anderen Worten können die Klammerarme der Klammervorrichtung zwischen einer geöffneten Position und einer geschlossenen Position gewechselt werden, indem die Klammerarme eine Verschwenkung bzw. Rotation um ihre jeweilige Schwenkachse erfahren. Zum Schließen der Klammervorrichtung werden die Klammerarme um die Schwenkachsen derart verschwenkt bzw. rotiert, dass die Halteabschnitte der Klammerarme aufeinander zu rotiert werden. Entsprechend ist zum Öffnen der Klammer eine Rotation der Klammerarme und somit der Halteabschnitte voneinander weg erforderlich. Aufgrund der rotativen Anordnung der Klammerarme kann es insbesondere, wenn die Klammervorrichtung dafür vorgesehen ist, Behälter unterschiedlicher Größe, insbesondere verschiedene Behältertypen mit unterschiedlichen Behälterdurchmessern zu halten, zwischen den einzelnen Behältertypen zu einem Versatz der Mittelachse der Behälter kommen. Mit anderen Worten können die Mittelachsen von Behältern verschiedenen Typs, wenn diese durch die Klammervorrichtung gehalten werden, bei Rundläuferkarussellen beispielsweise auf unterschiedlichen Teilkreisdurchmessern liegen.

Die Betätigungseinheiten zum aktiven Verstellen der Klammerarmpositionen ist hierbei am den Halteabschnitten gegenüberliegenden Ende der Klammerarme angeordnet, damit die Betätigungseinheiten besser gegen Verunreinigungen durch ein Füllprodukt geschützt sind und die Betätigungseinheit bzw. Teile davon nicht in bzw. nahe des Bereichs vorliegen, welcher für den zu behandelnden Behälter vorgesehen ist.

Ferner ist es bekannt, die Klammerarme über eine gemeinsame Schwenkachse verschwenkbar auszubilden, wie der DE 10 2011 077 167 A1 zu entnehmen. Hierdurch sind jedoch für das Behandeln verschiedener Behältergrößen gegenüber Klammervorrichtungen mit zwei separaten Schwenkachsen größere Schwenkwinkel der Klammerarme zueinander erforderlich, so dass bereits bei Behältertypen mit gering unterschiedlicher Größe ein vergleichsweise stärkeres Verschwenken erforderlich ist, so dass das Positionieren der Mittelachsen der Behältertypen auf demselben Teilkreisdurchmesser nicht oder nur schwerlich möglich ist. Folglich eignen sich derartige Klammervorrichtungen nur bedingt für die Behandlung von in der Größe unterschiedlichen Behältern.

Die EP 0 939 044 A1 beschreibt eine Greifvorrichtung für Flaschen gemäß dem Oberbegriff des Anspruchs 1, mit zwei Greifarmen, die mit einem Steuernocken in eine Halteposition oder eine Löseposition bringbar sind, indem der Steuernocken mit einer an jedem Greifarm ausgebildeten Anlagefläche zusammenwirkt.

### Darstellung der Erfindung

Ausgehend von dem bekannten Stand der Technik ist es eine Aufgabe der vorliegenden Erfindung, eine verbesserte Klammervorrichtung zum Halten eines Behälters in einer Behälterbehandlungsvorrichtung, insbesondere zum Halten eines Getränkebehälters in einem Halsabschnitt oder in einem Bauchabschnitt, sowie eine entsprechende Behälterbehandlungsvorrichtung bereitzustellen.

Die Aufgabe wird durch eine Klammervorrichtung zum Halten eines Behälters in einer Behälterbehandlungsvorrichtung, bevorzugt zum Halten eines Getränkebehälters in einem Halsabschnitt oder in einem Bauchabschnitt, mit den Merkmalen des Anspruchs 1 gelöst. Vorteilhafte Weiterbildungen ergeben sich aus den Unteransprüchen, der Beschreibung und den Figuren.

Entsprechend wird eine Klammervorrichtung zum Halten eines Behälters in einer Behälterbehandlungsvorrichtung, bevorzugt zum Halten eines Getränkebehälters in einem Halsabschnitt oder in einem Bauchabschnitt, vorgeschlagen, umfassend zwei Klammerarme, die jeweils an einer Vorderseite einen Halteabschnitt zum Halten des zu haltenden Behälters aufweisen, und ein einstückig mit den Klammerarmen ausgebildetes Vorspannelement zum Vorspannen der Halteabschnitte in eine vorgegebene Position. Die Klammervorrichtung umfasst ferner, dass die Klammerarme an einem den Halteabschnitten gegenüberliegenden rückseitigen Endbereich der Klammerarme an einer gemeinsamen Schwenkachse zueinander verschwenkbar aufgenommen sind.

Unter dem Begriff "Schwenkachse" ist hier eine Achse im geometrischen Sinne zu verstehen. Gleichwohl kann die Schwenkachse durch eine Achse im mechanischen Sinne ausgebildet beziehungsweise bereitgestellt sein, etwa durch eine Bolzenverbindung, eine Passschraubenverbindung oder eine Stiftverbindung.

Dadurch, dass die Klammerarme an einem den Halteabschnitten gegenüberliegenden rückseitigen Endbereich der Klammerarme an einer gemeinsamen Schwenkachse zueinander verschwenkbar aufgenommen sind, kann im Vergleich zu herkömmlichen Klammervorrichtungen, insbesondere solchen, die eine einteilige Klammer, ausgebildet aus den Klammerarmen und dem mit diesen einstückig ausgebildeten Vorspannelement, umfassen, ein vereinfachter Aufbau erzielt werden, da lediglich die eine, gemeinsame Schwenkachse auszubilden ist, was gegenüber Klammern mit zwei separaten Schwenkachsen weniger Teile erfordert.

Zudem ist es dadurch im Vergleich zu herkömmlichen Klammervorrichtungen möglich, Behältertypen über einen größeren Durchmesserbereich zu gehalten. Aufgrund dessen, dass die Schwenkachse am rückseitigen Endbereich der Klammerarme ausgebildet ist, ist diese im Vergleich zu Klammerarmen, welche ihre Schwenkachse im Mittelbereich des Klammerarms aufweisen, weiter vom Halteabschnitt entfernt. Mit zunehmender Entfernung von der Schwenkachse vergrößert sich bei einem vorgegebenen Schwenkwinkel der Abstand der Haltebereiche zueinander. Da zum Aufnehmen eines Behältertypen mit einem großen Durchmesser hierbei kein größerer Schwenkwinkel notwendig ist, können auch Behältertypen mit vergleichsweise großen Durchmessern und Behältertypen mit vergleichsweise kleinen Durchmessern im Wesentlichen auf demselben Teilkreisdurchmesser gehalten werden.

Gemäß einer weiteren bevorzugten Ausführungsform weist zumindest ein Halteabschnitt, bevorzugt beide Halteabschnitte, einen ersten Haltebereich zum Ausbilden eines ersten Berührpunktes mit dem gehaltenen Behälter und einen zweiten Haltebereich zum Ausbilden eines zweiten Berührpunktes mit dem gehaltenen Behälter auf, wobei bevorzugt der erste Haltebereich eine erste Krümmung aufweist und der zweite Haltebereich eine zur ersten Krümmung entgegengesetzt orientierte zweite Krümmung aufweist.

Der Begriff "Berührpunkt" umfasst hier sowohl Punktkontakte und Linienkontakte, wie sie sich insbesondere bei harten, starren, nicht verformbaren Behältern, beispielsweise Glasflaschen ausbilden, als auch Flächenkontakte im geometrischen Sinne. Mit anderen Worten ist ein Berührpunkt ein lokal begrenzter Kontaktbereich zwischen Klammerarm und Behälter. Die Klammervorrichtung hält bzw. stützt den gehaltenen Behälter dabei über die Berührpunkte.

Der erste Haltebereich ist näher an der Schwenkachse angeordnet als der zweite Haltebereich. Mit anderen Worten ist der erste Haltebereich zwischen dem zweiten Haltebereich und der Schwenkachse angeordnet.

Dadurch, dass der erste Haltebereich eine erste Krümmung aufweist und der zweite Haltebereich eine zur ersten Krümmung entgegengesetzt orientierte zweite Krümmung aufweist, kann erreicht werden, dass Behältertypen mit unterschiedlichen Durchmessern, wenn diese alternativ durch die Klammervorrichtung gehalten werden, besonders genau mit ihrer Mittellängsachse im Wesentlichen auf demselben Teilkreisdurchmesser positioniert sind. Entsprechend können bei Klammervorrichtungen mit schwenkbaren Klammerarmen durch einen derartig ausgebildeten Halteabschnitt verschiedene Behältertypen mit unterschiedlichen Durchmessern besonders exakt im Wesentlichen auf demselben Teilkreisdurchmesser positioniert werden.

Vorzugsweise weist der erste Haltebereich eine konvexe Krümmung auf, und weist der zweite Haltebereich eine konkave Krümmung auf.

Der Begriff "konvexe Krümmung" bedeutet in Bezug auf den Klammerarm nach außen gewölbt. Entsprechend bedeutet der Begriff "konkave Krümmung" in Bezug auf den Klammerarm nach innen gewölbt. Ein Beispiel eines ersten Haltebereichs mit einer konvexen Krümmung und eines zweiten Haltebereichs mit einer konkaven Krümmung kann den beigefügten Figuren entnommen werden.

Insbesondere die Kombination aus dem Vorsehen einer gemeinsamen Schwenkachse für beide Klammerarme und der Ausbildung der Halteabschnitte derart, dass der erste Haltebereich eine konvexe Krümmung aufweist und der zweite Haltebereich eine konkave Krümmung aufweist, ermöglicht es, verschiedene Behältertypen mit unterschiedlichen Durchmessern stets besonders exakt auf demselben Teilkreisdurchmesser zu positionieren.

Die Krümmungen der Haltebereiche können jeweils zumindest teilweise einen konstanten Krümmungsradius und/oder zumindest teilweise einen Abschnitt mit veränderlicher Krümmung gleichen Vorzeichens aufweisen.

Um ein bezogen auf eine Längsrichtung bzw. Längsachse der Klammervorrichtung, welche sich im Wesentlichen von der Schwenkachse zum Mittelpunkt zwischen den beiden Haltebereichen erstreckt, ein im Wesentlichen spiegelsymmetrisches Halten des in der Klammervorrichtung gehaltenen Behälters zu erzielen, können die Krümmungen der ersten Halteabschnitte der beiden Klammerarme in Bezug auf die zwischen den Klammerarmen verlaufenden Längsachse entgegengesetzt orientiert sein. Beispielsweise weisen dann beide Klammerarme jeweils an ihrem ersten Haltebereich eine konvexe Krümmung auf, sie sind mithin nach außen, in Richtung auf die Längsachse zu gewölbt. Entsprechend können die zweiten Haltebereiche der Klammerarme jeweils eine konkave Krümmung aufweisen.

Vorzugsweise sind die Halteabschnitte der beiden Klammerarme zueinander spiegelsymmetrisch ausgebildet. Mit anderen Worten sind vorzugsweise die Halteabschnitte in Bezug auf die zwischen den Klammerarmen liegenden Längsachse der Klammervorrichtung spiegelsymmetrisch ausgebildet.

Gemäß einer bevorzugten Ausführungsform ist das Vorspannelement als Federbügel ausgebildet, wobei das Vorspannelement bevorzugt in Form eines sich von einem Klammerarm zu dem anderen Klammerarm erstreckenden Bogens ausgebildet ist, wobei bevorzugt das Vorspannelement zwischen dem Halteabschnitt und der Schwenkachse an den Klammerarmen angebunden ist, wobei sich das Vorspannelement bevorzugt von seiner Anbindung an die Klammerarme nach hinten erstreckt und die Klammerarme umspannt, wobei bevorzugt das Vorspannelement und die Klammerarme, bevorzugt senkrecht zur Schwenkachse gesehen, sich im Wesentlichen in einer Ebene erstrecken.

Ein derart ausgebildetes Vorspannelement weist eine leicht zu reinigende Form auf, welche zudem in einfacher Weise hergestellt werden kann. Zudem kann über eine Länge des Federbügels beziehungsweise des Bogens sowie dessen Profil eine Vorspannkraft, mit welcher das Vorspannelement die Klammerarme vorspannt, besonders genau vorgegeben und/oder an den jeweiligen Anwendungsfall angepasst sein.

Gemäß einer weiteren bevorzugten Ausführungsform weisen die Klammerarme jeweils einen Steuerabschnitt zur Interaktion mit einer Betätigungseinheit zum aktiven Bewegen des jeweiligen Halteabschnitts auf, wobei bevorzugt der Steuerabschnitt zwischen dem Halteabschnitt und der Schwenkachse angeordnet ist.

Gemäß einer weiteren bevorzugten Ausführungsform weist die Klammervorrichtung ferner eine Betätigungseinheit zum aktiven Bewegen der Halteabschnitte gegen die Vorspannung auf. Die Klammervorrichtung stellt dann eine aktive Klammervorrichtung dar, bei welcher ein Öffnen oder Schließen der jeweiligen Halteabschnitte der Klammervorrichtung mittels der Betätigungseinheit aktiv durchgeführt werden kann.

So kann etwa bei einem Einsatz der Klammervorrichtung an einer Transportvorrichtung in Rundläuferbauweise die Bewegungsrichtung des Betätigungsglieds bezogen auf eine zentrale Drehachse der Transportvorrichtung im Wesentlichen radial orientiert sein, wohingegen das Aufschwenken und Zuschwenken der Klammerarme bezogen auf die Drehachse im Wesentlichen tangential gerichtet sein kann.

Es hat sich als besonders vorteilhaft herausgestellt, wenn eine Verschiebung eines verschiebbaren Betätigungsglieds der Betätigungseinheit, bevorzugt eines in Richtung einer Längsachse der Klammervorrichtung verschiebbaren Betätigungsglieds, ein Schwenken der Klammerarme bewirkt.

Gemäß einer weiteren bevorzugten Ausführungsform ist das Betätigungsglied mit den Klammerarmen jeweils über ein schwenkbar an dem Betätigungsglied und schwenkbar an dem jeweiligen Klammerarm angeordnetes Koppelglied gekoppelt, oder aber das Betätigungsglied umfasst zumindest einen Zahnstangenabschnitt und die Klammerarme weisen jeweils einen Verzahnungsabschnitt auf, wobei jeder der beiden Klammerarme mit seinem Verzahnungsabschnitt jeweils mit dem zumindest einen Zahnstangenabschnitt des Betätigungsglieds gekoppelt ist. Dies stellt sich insbesondere in Bezug auf die Krafteinleitung seitens des Betätigungsglieds über das Koppelglied auf den Klammerarm als vorteilhaft dar.

Vorzugsweise ist das Koppelglied am jeweiligen Klammerarm zwischen dem Halteabschnitt und der Schwenkachse angebunden. Die Anbindung des Koppelglieds an den zugehörigen Klammerarm bildet mithin einen Steuerabschnitt aus.

Gemäß einer weiteren bevorzugten Ausführungsform sind die Halteabschnitte in einen vorgegebenen Abstand zueinander vorgespannt, wobei bevorzugt der vorgegebene Abstand einer Öffnungsposition der Halteabschnitte entspricht und die Halteabschnitte durch ein Schwenken der Klammerarme gegen die Vorspannung in eine Schließposition bewegbar sind. Hierdurch kann erreicht werden, dass die Klammervorrichtung lediglich durch ein aktives Ansteuern via des Betätigungsgliedes in die Schließposition gebracht werden kann.

Alternativ kann der vorgegebene Abstand einer Schließposition der Halteabschnitte entsprechend. Dann sind die Halteabschnitte durch ein Schwenken der Klammerarme in eine Öffnungsposition bewegbar. In dieser Ausführungsform werden in der Klammer gehaltene Behälter bereits aufgrund der Vorspannung sicher gehalten, wobei ein Freigeben des gehaltenen Behälters durch ein aktives Ansteuern des Betätigungsglieds ermöglicht ist.

Für ein besonders genaues Vorgeben des Abstands der Halteabschnitte zueinander durch das Betätigungsglied kann das Betätigungsglied ein Interaktionselement zum Interagieren mit einer Vorgabevorrichtung zum Vorgeben der Position des Betätigungsglieds aufweisen, wobei das Interaktionselement bevorzugt in Form eines Gleitelements und/oder einer Rolle, bevorzugt ausgebildet zum Gleiten und/oder Abrollen auf einer Leitkurve, ausgebildet ist, wobei das Interaktionselement bevorzugt auf einer den Halteabschnitten abgewandten Seite des Betätigungsglieds angeordnet ist.

Um zu verhindern, dass ein Klammerarm während seines Einsatzes aufgrund des Haltens des Behälters oder des Haltens der Klammerarme in einer geöffneten Position eine elastische oder gar plastische Verformung des Klammerarms, insbesondere eine elastische oder gar plastische Biegung oder Torsion erfährt, kann zumindest ein Klammerarm ein Versteifungselement zum Versteifen zumindest eines Teilbereiches des Klammerarms, bevorzugt in Form einer Rippe, aufweisen.

Es wird eine weitere, hierin nicht beanspruchte Klammervorrichtung zum Halten eines Behälters in einer Behälterbehandlungsvorrichtung, bevorzugt zum Halten eines Getränkebehälters in einem Halsabschnitt oder in einem Bauchabschnitt, vorgeschlagen, umfassend zwei gegensinnig zueinander schwenkbare Klammerarme, die jeweils einen Halteabschnitt zum Halten des zu haltenden Behälters aufweisen, wobei jeder Halteabschnitt einen ersten Haltebereich zum Ausbilden eines ersten Berührpunktes mit dem gehaltenen Behälter und einen zweiten Haltebereich zum Ausbilden eines zweiten Berührpunktes mit dem gehaltenen Behälter aufweist. Die Klammervorrichtung ist ferner derart ausgebildet, dass der erste Haltebereich eine erste Krümmung aufweist und der zweite Haltebereich eine zur ersten Krümmung entgegengesetzt orientierte zweite Krümmung aufweist.

Der Begriff "Berührpunkt" umfasst hier sowohl Punktkontakte und Linienkontakte, wie sie sich insbesondere bei harten, starren, nicht verformbaren Behältern, beispielsweise Glasflaschen ausbilden, als auch Flächenkontakte im geometrischen Sinne. Mit anderen Worten ist ein Berührpunkt ein lokal begrenzter Kontaktbereich zwischen Klammerarm und Behälter. Die Klammervorrichtung hält bzw. stützt den gehaltenen Behälter dabei über die Berührpunkte.

Vorzugsweise ist erste Haltebereich ist näher an einer Schwenkachse des jeweiligen Klammerarms angeordnet als der zweite Haltebereich. Mit anderen Worten kann der erste Haltebereich zwischen dem zweiten Haltebereich und der Schwenkachse angeordnet sein.

Da der erste Haltebereich eine erste Krümmung aufweist und der zweite Haltebereich eine zur ersten Krümmung entgegengesetzt orientierte zweite Krümmung aufweist, kann erreicht werden, dass Behältertypen mit unterschiedlichen Durchmessern, wenn diese alternativ durch die Klammervorrichtung gehalten werden, besonders genau mit ihrer Mittellängsachse im Wesentlichen auf demselben Teilkreisdurchmesser positioniert sind. Entsprechend können bei Klammervorrichtungen mit schwenkbaren Klammerarmen durch einen derartig ausgebildeten Halteabschnitt verschiedene Behältertypen mit unterschiedlichen Durchmessern besonders exakt im Wesentlichen auf demselben Teilkreisdurchmesser positioniert werden.

Vorzugsweise weist der erste Haltebereich eine konvexe Krümmung auf, und weist der zweite Haltebereich eine konkave Krümmung auf.

Der Begriff "konvexe Krümmung" bedeutet in Bezug auf den Klammerarm nach außen gewölbt. Entsprechend bedeutet der Begriff "konkave Krümmung" in Bezug auf den Klammerarm nach innen gewölbt. Ein Beispiel eines ersten Haltebereichs mit einer konvexen Krümmung und eines zweiten Haltebereichs mit einer konkaven Krümmung kann den beigefügten Figuren entnommen werden.

Die Krümmungen der Haltebereiche können jeweils zumindest teilweise einen konstanten Krümmungsradius und/oder zumindest teilweise einen Abschnitt mit veränderlicher Krümmung gleichen Vorzeichens aufweisen.

Um ein bezogen auf eine Längsachse der Klammervorrichtung, welche sich mittige zwischen den Klammerarmen von der Vorderseite zur Rückseite der Klammerarmen erstreckt, ein im Wesentlichen spiegelsymmetrisches Halten des in der Klammervorrichtung gehaltenen Behälters zu erzielen, können die Krümmungen der Halteabschnitte der beiden Klammerarme in Bezug auf die zwischen den Klammerarmen verlaufenden Längsachse entgegengesetzt orientiert sind. Beispielsweise weisen dann beide Klammerarme jeweils an ihrem ersten Haltebereich eine konvexe Krümmung auf, sie sind mithin nach außen, in Richtung auf die Längsachse zu gewölbt. Entsprechend können die zweiten Haltebereiche der Klammerarme jeweils eine konkave Krümmung aufweisen.

Vorzugsweise sind die Halteabschnitte der beiden Klammerarme zueinander spiegelsymmetrisch ausgebildet. Mit anderen Worten sind vorzugsweise die Halteabschnitte in Bezug auf die zwischen den Klammerarmen liegenden Längsachse der Klammervorrichtung spiegelsymmetrisch ausgebildet.

Gemäß einer weiteren bevorzugten Ausführungsform weist jeder Klammerarm eine eigene Schwenkachse auf.

Alternativ können die Klammerarme auch eine gemeinsame Schwenkachse aufweisen.

Unter dem Begriff "Schwenkachse" ist hier eine Achse im geometrischen Sinne zu verstehen. Gleichwohl kann die Schwenkachse durch eine Achse im mechanischen Sinne ausgebildet beziehungsweise bereitgestellt sein, etwa durch eine Bolzenverbindung, eine Passschraubenverbindung oder eine Stiftverbindung.

Insbesondere die Kombination aus dem Vorsehen einer gemeinsamen Schwenkachse für beide Klammerarme und der Ausbildung der Halteabschnitte derart, dass der erste Haltebereich eine konvexe Krümmung aufweist und der zweite Haltebereich eine konkave Krümmung aufweist, ermöglicht es, verschiedene Behältertypen mit unterschiedlichen Durchmessern stets besonders exakt auf demselben Teilkreisdurchmesser zu positionieren.

Gemäß einer weiteren bevorzugten Ausführungsform ist zumindest ein Vorspannelement zum Vorspannen der Halteabschnitte gegeneinander vorgesehen, wobei bevorzugt die Klammerarme und zumindest ein Vorspannelement einstückig ausgebildet sind, wobei bevorzugt ein Vorspannelement einen elastischen, sich von einem Klammerarm zu dem anderen Klammerarm erstreckenden Federbügel aufweist, wobei bevorzugt der Federbügel an den Klammerarmen jeweils zwischen einer Schwenkachse des Klammerarms und dem Halteabschnitt angebunden ist, wobei sich der Federbügel und die Klammerarme bevorzugt im Wesentlichen in einer Ebene erstrecken.

Durch das zumindest eine Vorspannelement können die Haltebereiche der Klammerarme in eine vorgegebene Position vorgespannt sein.

Ein als Federbügel ausgebildetes Vorspannelement weist eine leicht zu reinigende Form auf, welche zudem in einfacher Weise hergestellt werden kann. Zudem kann über eine Länge des Federbügels beziehungsweise des Bogens sowie dessen Profil eine Vorspannkraft, mit welcher das Vorspannelement die Klammerarme vorspannt, besonders genau vorgegeben und/oder an den jeweiligen Anwendungsfall angepasst sein.

Gemäß einer weiteren bevorzugten Ausführungsform sind die Halteabschnitte in einen vorgegebenen Abstand zueinander vorgespannt, wobei bevorzugt der vorgegebene Abstand einer Öffnungsposition der Halteabschnitte entspricht und die Halteabschnitte durch ein Schwenken der Klammerarme gegen die Vorspannung in eine Schließposition bewegbar sind. Hierdurch kann erzielt werden, dass die Klammervorrichtung lediglich durch ein aktives Ansteuern via des Betätigungsgliedes in die Schließposition gebracht werden kann.

Alternativ kann der vorgegebene Abstand einer Schließposition der Halteabschnitte entsprechen. Dann sind die Halteabschnitte durch ein Schwenken der Klammerarme entsprechend in eine Öffnungsposition bewegbar. In dieser Ausführungsform werden in der Klammer gehaltene Behälter bereits aufgrund der Vorspannung sicher gehalten, wobei ein Freigeben des gehaltenen Behälters durch ein aktives Ansteuern des Betätigungsglieds ermöglicht ist.

Gemäß einer weiteren bevorzugten Ausführungsform weist die Klammervorrichtung ferner eine Betätigungseinheit zum aktiven Bewegen der Halteabschnitte gegen die Vorspannung auf. Die Klammervorrichtung stellt dann eine aktive Klammervorrichtung dar, bei welcher ein Öffnen oder Schließen der Halteabschnitte der Klammervorrichtung mittels der Betätigungseinheit aktiv durchgeführt werden kann.

So kann etwa bei einem Einsatz der Klammervorrichtung an einer Transportvorrichtung in Rundläuferbauweise die Bewegungsrichtung des Betätigungsglieds bezogen auf eine zentrale Drehachse der Transportvorrichtung im Wesentlichen radial orientiert sein, wohingegen das Aufschwenken und Zuschwenken der Klammerarme bezogen auf die Drehachse im Wesentlichen tangential gerichtet sein kann.

Es hat sich als besonders vorteilhaft herausgestellt, wenn eine Verschiebung eines verschiebbaren Betätigungsglieds der Betätigungseinheit, bevorzugt eines in Richtung einer Längsachse der Klammervorrichtung verschiebbaren Betätigungsglieds, ein Schwenken der Klammerarme bewirkt.

Gemäß einer weiteren bevorzugten Ausführungsform ist das Betätigungsglied mit den Klammerarmen jeweils über ein schwenkbar an dem Betätigungsglied und schwenkbar an dem jeweiligen Klammerarm angeordnetes Koppelglied gekoppelt, oder das Betätigungsglied umfasst zumindest einen Zahnstangenabschnitt und die Klammerarme weisen jeweils einen Verzahnungsabschnitt auf, wobei jeder der beiden Klammerarme mit seinem Verzahnungsabschnitt jeweils mit dem zumindest einen Zahnstangenabschnitt des Betätigungsglieds gekoppelt ist. Dies stellt sich insbesondere in Bezug auf die Krafteinleitung seitens des Betätigungsglieds über das Koppelglied auf den Klammerarm als vorteilhaft dar.

Vorzugsweise ist das Koppelglied am jeweiligen Klammerarm zwischen dem Halteabschnitt und der Schwenkachse angebunden. Die Anbindung des Koppelglieds an den zugehörigen Klammerarm bildet mithin einen Steuerabschnitt aus.

Für ein besonders genaues Vorgeben des Abstands der Halteabschnitte zueinander durch das Betätigungsglied kann das Betätigungsglied ein Interaktionselement zum Interagieren mit einer Vorgabevorrichtung zum Vorgeben der Position des Betätigungsglieds aufweisen, wobei das Interaktionselement bevorzugt in Form eines Gleitelements und/oder einer Rolle, bevorzugt ausgebildet zum Gleiten und/oder Abrollen auf einer Leitkurve, ausgebildet ist, wobei das Interaktionselement bevorzugt auf einer den Halteabschnitten abgewandten Seite des Betätigungsglieds angeordnet ist.

Um zu verhindern, dass ein Klammerarm während seines Einsatzes aufgrund des Haltens des Behälters oder des Haltens der Klammerarme in einer geöffneten Position eine elastische oder gar plastische Verformung des Klammerarms, insbesondere eine elastische oder gar plastische Biegung oder Torsion erfährt, kann zumindest ein Klammerarm ein Versteifungselement, bevorzugt in Form einer Rippe, zum Versteifen zumindest eines Teilbereiches des Klammerarms aufweisen.

Die oben genannte Aufgabe wird ferner durch eine Behälterbehandlungsvorrichtung mit den Merkmalen des Anspruchs 8 gelöst. Vorteilhafte Weiterbildungen ergeben sich aus der Beschreibung und den beigefügten Figuren.

Entsprechend wird eine Behälterbehandlungsvorrichtung vorgeschlagen, umfassend eine Transportvorrichtung zum Transportieren eines Behälters. Die Behälterbehandlungsvorrichtung kennzeichnet sich dadurch, dass die Transportvorrichtung zumindest eine Klammervorrichtung gemäß einem der vorstehenden Ausführungsformen aufweist.

Die hinsichtlich der Klammervorrichtungen beschriebenen, erzielbaren Vorteile und Wirkungen treffen analog auch auf die Behälterbehandlungsvorrichtung zu.

Merkmale und Wirkungen, die hinsichtlich der Klammervorrichtungen beschrieben sind, gelten ebenfalls für die Behälterbehandlungsvorrichtung, und umgekehrt.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine perspektivische Seitenansicht einer Klammervorrichtung zum Halten eines Behälters;
- Figur 2: schematisch eine Draufsicht der Klammervorrichtung aus Figur 1;
- Figur 3: schematisch eine perspektivische Ansicht von unten der Klammervorrichtung aus Figur 1;
- Figur 4: schematisch eine Schnittansicht durch die Klammervorrichtung aus Figur 1;
- Figur 5: schematisch eine Draufsicht der Klammervorrichtung aus Figur 1 beim Halten eines Behälters eines ersten Behältertyps;
- Figur 6: schematisch eine Draufsicht der Klammervorrichtung aus Figur 1 beim Halten eines Behälters eines zweiten Behältertyps; und
- Figur 7: schematisch eine Draufsicht einer Behälterbehandlungsvorrichtung.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

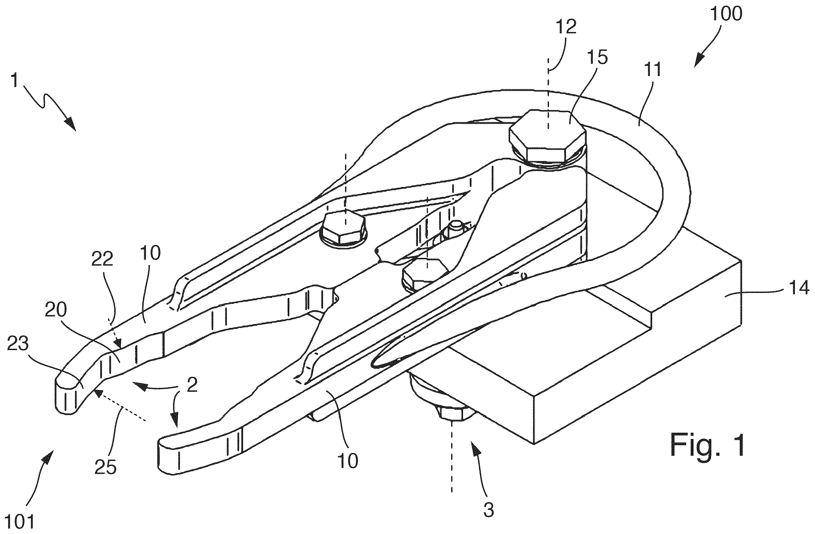

In Figur 1 ist schematisch eine perspektivische Seitenansicht einer Klammervorrichtung 1 zum Halten eines Behälters, vorliegend zum Halten eines Getränkebehälters in einem Bauchabschnitt in einer Behälterbehandlungsvorrichtung, gezeigt. Die Klammervorrichtung 1 umfasst zwei Klammerarme 10, die jeweils an einer Vorderseite 101 einen Halteabschnitt 2 zum Halten des zu haltenden Behälters aufweisen. Mit den Klammerarmen 10 ist einstückig ein Vorspannelement 11 in Form eines Federbügels ausgebildet, welcher die Klammerarme 10 und mithin die Halteabschnitte 2 in eine vorgegebene Position, hier eine geschlossene Position der Klammervorrichtung 1 bzw. Schließposition der Halteabschnitte 2, vorgespannt.

Das Vorspannelement 11 erstreckt sich von einem mittleren Bereich des einen Klammerarms 10 bogenförmig um einen rückseitigen Endbereich 100 zu einem mittleren Bereich des anderen Klammerarms 10.

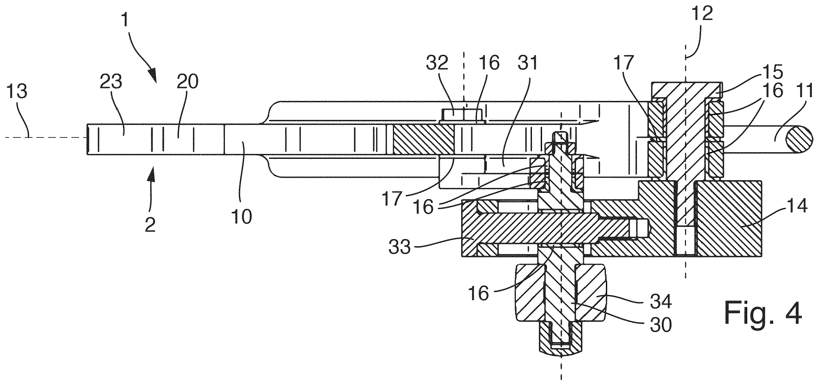

Die Klammerarme 10 sind an dem den Halteabschnitten 2 gegenüberliegenden rückseitigen Endbereich 100 der Klammerarme 10 an einer gemeinsamen Schwenkachse 12 zueinander verschwenkbar angeordnet. Die geometrische Schwenkachse 12 ist durch eine an eine Basisplatte 14 montierte Passschraube 15 ausgebildet, wie in Hinblick auf Figur 4 näher beschrieben.

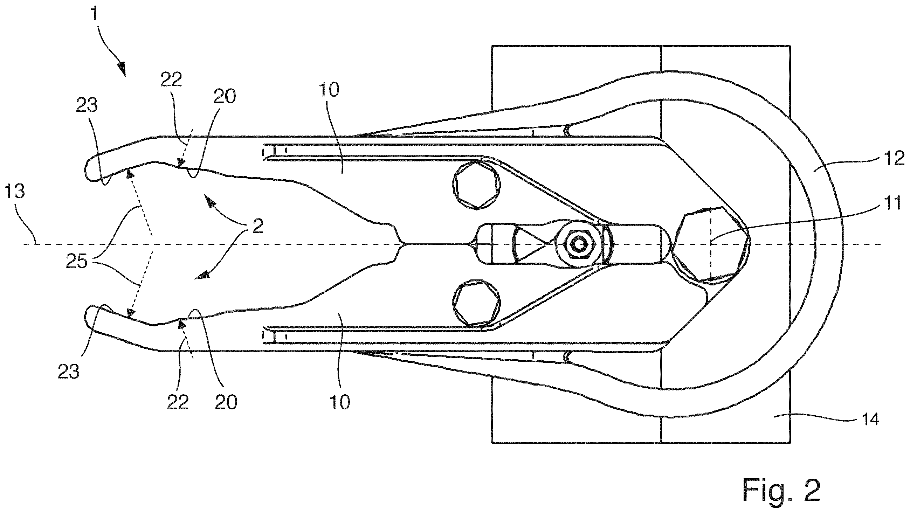

Die Klammerarme 10 sind hinsichtlich einer Mittelachse bzw. Längsachse 13 (siehe Figur 2) der Klammervorrichtung 1 symmetrisch ausgebildet.

Zum Versteifen der Klammerarme 10 weisen diese in Richtung der Schwenkachse 12 beidseitig optionale, rippenförmige Versteifungselemente 18 auf.

Wie aus Figur 1 und Figur 2, welche eine Draufsicht der Klammervorrichtung 1 aus Figur 1 zeigt, zu entnehmen, umfasst der Halteabschnitt 2 jedes Klammerarms 10 einen ersten Haltebereich 20 zum Ausbilden eines ersten Berührpunktes mit dem gehaltenen Behälter und einen zweiten Haltebereich 23 zum Ausbilden eines zweiten Berührpunktes mit dem gehaltenen Behälter.

Der erste Haltebereich 20 umfasst eine erste Krümmung, welche hier mittels des Bezugszeichens 22 angedeutet ist. Der zweite Haltebereich 23 umfasst eine zweite Krümmung, welche mittels des Bezugszeichens 25 angedeutet ist. Die zweite Krümmung 25 ist zur ersten Krümmung 22 entgegengesetzt orientiert.

Vorliegend weist der erste Haltebereich 20 eine konvexe Krümmung auf. Mit anderen Worten ist der Klammerarm 10 im ersten Haltebereich 20 nach außen gewölbt. Der zweite Haltebereich 23 weist eine konkave Krümmung auf. Mit anderen Worten ist der Klammerarm 10 im zweiten Haltebereich 23 nach innen gewölbt.

Die Krümmungen 22, 25 weisen vorliegend jeweils einen konstanten Krümmungsradius auf, wobei der Betrag des Krümmungsradius' der ersten Krümmung 22 kleiner ist als der Betrag des Krümmungsradius' der zweiten Krümmung 25.

Alternativ kann zumindest eine der Krümmungen 22, 25 auch über die Länge des entsprechenden Haltebereichs 20, 23 gesehen sich in seinem Betrag verändernden Krümmungsradiusverlauf aufweisen.

Ferner können die erste Krümmung 22 und die weite Krümmung 25 auch den gleichen Betrag aufweisen.

Die Klammervorrichtung 1 ist als aktive Klammervorrichtung 1 ausgebildet. Hierzu umfasst sie eine Betätigungseinheit 3, mittels welcher die Klammerarme 10 und mithin die Halteabschnitte 2 aus der in den Figuren 1 und 2 gezeigten Schließposition gegensinnig voneinander weg geschwenkt werden können. Entsprechend ist es durch die Betätigungseinheit 3 möglich, die Halteabschnitte 2 aus der Schließposition in eine Öffnungsposition zu schwenken, in welcher die Halteabschnitte 2 relativ zueinander einen größeren Abstand senkrecht zur Längsachse 13 aufweisen als in der Schließposition.

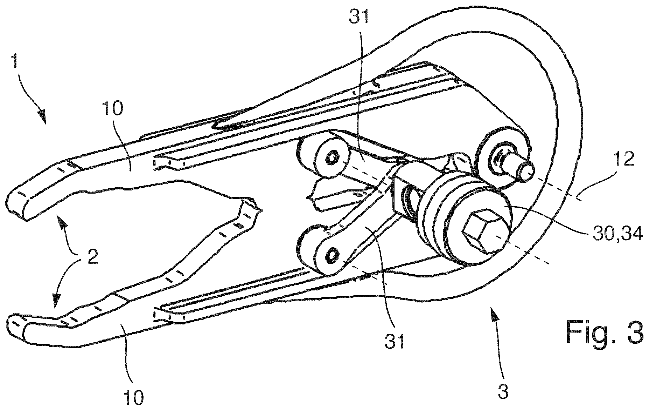

Figur 3 zeigt schematisch eine perspektivische Ansicht von unten der Klammervorrichtung 1 aus Figur 1, aus welcher die Betätigungseinheit 3 zu entnehmen ist.

Die Betätigungseinheit 3 umfasst ein Betätigungsglied 30, welches in Richtung der Längsachse 13 verschiebbar ist. Das Betätigungsglied 30 ist mit den Klammerarmen 10 jeweils über ein schwenkbar an dem Betätigungsglied 30 und schwenkbar an dem jeweiligen Klammerarm 10 angeordnetes Koppelglied 31 gekoppelt. Die Anbindung des Koppelgliedes 31 an dem Klammerarm 10 entspricht mitten einem Steuerabschnitt zum Steuern der Position des Halteabschnitts 2.

Das Koppelglied 31 ist an dem ihm zugeordneten Klammerarm 10 zwischen dem Halteabschnitt 2 und der Schwenkachse 12 angebunden.

Um die Position des Betätigungsglieds 30 vorgeben zu können, umfasst das Betätigungsglied 30 eine Rolle 34, welche dazu eingerichtet ist, mit einer Vorgabevorrichtung, vorliegend einer Leitkurve (nicht gezeigt), zu interagieren, indem die Rolle 34 über die Leitkurve abrollt.

Figur 4 zeigt schematisch eine Schnittansicht durch die Klammervorrichtung 1 aus Figur 1 entlang der Längsachse 13. Das Koppelglied 31 ist mittels des Bolzens 32 schwenkbar an dem Klammerarm 10 angeordnet. Am gegenüberliegenden Ende des Koppelglieds 31 ist dieses schwenkbar an dem Betätigungsglied 30 angebunden.

Das Betätigungsglied 30 ist an einer parallel zur Längsachse 13 ausgerichteten, in die Basisplatte 14 eingeschraubten Passschraube 33 in Richtung der Längsachse 13 verschiebbar geführt. Bezogen auf die Basisplatte 14 ist die Rolle 34 auf der den Koppelgliedern 31 gegenüberliegenden Seite des Betätigungsglieds 30 drehbar an letzterem angeordnet.

Um die Lagerung der zuvor beschriebenen Teile zu verbessern, können Buchsen 16 und/oder Beilagscheiben 17 vorgesehen sein, wie Figur 4 zu entnehmen.

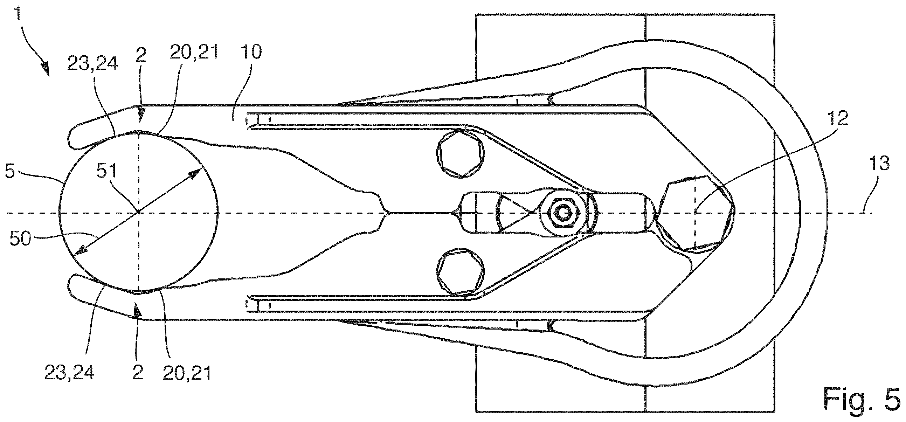

In Figur 5 ist schematisch eine Draufsicht der Klammervorrichtung 1 aus Figur 1 beim Halten eines Behälters 5 eines ersten Behältertyps gezeigt. Der Behälter 5 weist einen Durchmesser 50 auf.

Beim Halten des Behälters 5 bilden die Halteabschnitte 2 jeweils zwei voneinander in Richtung der Längsachse 13 beabstandete Berührpunkte 21, 24 aus.

Die Klammervorrichtung 1 hält den Behälter 5 in einer vorgegebenen Position, sodass die Mittelachse 51 des Behälters 5 einen vorgegebenen Abstand zur Schwenkachse 12 aufweist.

Der Behälter 5 stellt den Behältertyp mit den kleinstmöglichen Durchmesser 50 dar.

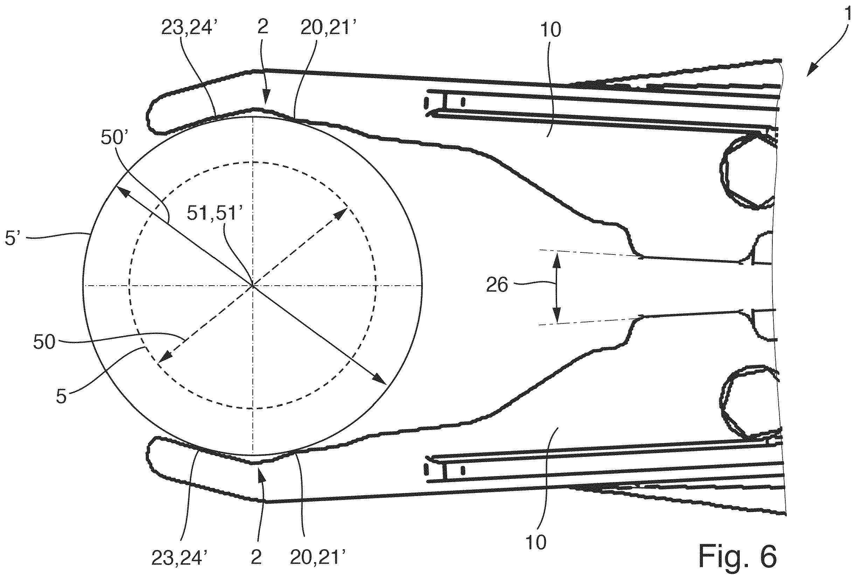

Figur 6 zeigt schematisch eine Draufsicht der Klammervorrichtung 1 aus Figur 1 beim Halten eines Behälters 5' eines zweiten Behältertyps, welcher im Vergleich zum Behälter 5 aus Figur 5 einen größeren Durchmesser 50' aufweist.

Die Halteabschnitte 2 bilden in ihren beiden Haltebereichen 20, 23 jeweils wieder einen ersten Berührpunkt 21 ` und einen zweiten Berührpunkt 24' auf.

Die Klammerarme 10 sind um die Schwenkachse 11 herum im Vergleich zu der in Figur 5 gezeigten Position um einen Winkel 26 voneinander weg geschwenkt.

Mittels des Bezugszeichens 5 ist der Behälter des ersten Behältertyps in seiner Position, wie er durch die Klammerarme 10 gehalten wird (siehe Figur 5) gezeigt. Zu erkennen ist, dass die Mittelachse 51 des Behälters 5 und die Mittelachse 51' des Behälters 5' im Wesentlichen konzentrisch sind. Entsprechend würden beide Behälter 5, 5' bei einer mit der Klammervorrichtung 1 ausgestatteten Transportvorrichtung in Rundläuferbauweise auf demselben Teilkreisdurchmesser transportiert werden.

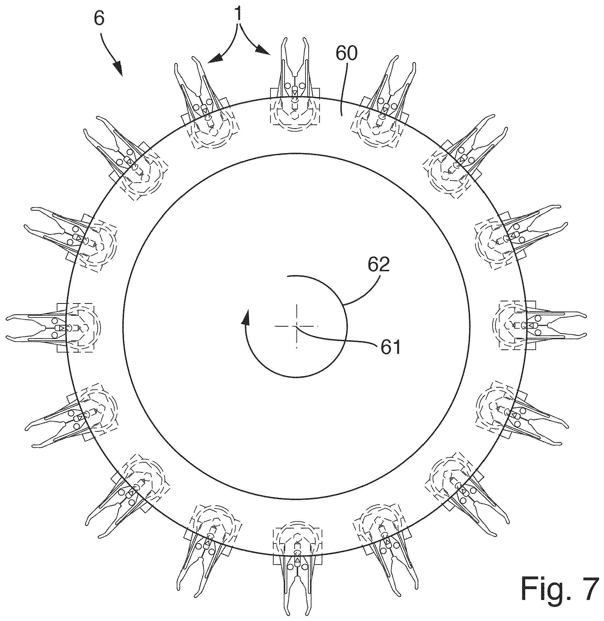

Figur 7 zeigt schematisch eine Draufsicht einer Behälterbehandlungsvorrichtung 6, welche eine Transportvorrichtung 60 in Rundläuferbauweise aufweist, welche um eine zentrale Drehachse 61 in zumindest einer Transportrichtung 62 drehbar ist.

Die Transportvorrichtung 60 umfasst eine Vielzahl von in Bezug auf die Drehachse 61 nach radial außen gerichteten, in Umfangsrichtung gleichmäßig voneinander beabstandeten Klammervorrichtungen 1 gemäß den Figuren 1 bis 6.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Klammervorrichtung
- 10: Klammerarm
- 100: Rückseitiger Endbereich
- 101: Vorderseite
- 11: Vorspannelement
- 12: Schwenkachse
- 13: Längsachse
- 14: Basisplatte
- 15: Passschraube
- 16: Buchse
- 17: Beilagscheibe
- 18: Versteifungselement

- 2: Halteabschnitt
- 20: Erster Haltebereich
- 21, 21': Erster Berührpunkt
- 22: Erste Krümmung
- 23: Zweiter Haltebereich
- 24, 24': Zweiter Berührpunkt
- 25: Zweite Krümmung
- 26: Winkel

- 3: Betätigungseinheit
- 30: Betätigungsglied
- 31: Koppelglied
- 32: Bolzen
- 33: Passschraube
- 34: Rolle

- 5, 5`: Behälter
- 50, 50': Durchmesser
- 51, 51': Mittelachse
- 6: Behälterbehandlungsvorrichtung
- 60: Transportvorrichtung
- 61: Drehachse
- 62: Transportrichtung

## Patentansprüche

1. Klammervorrichtung (1) zum Halten eines Behälters (5, 5') in einer Behälterbehandlungsvorrichtung (6), bevorzugt zum Halten eines Getränkebehälters in einem Halsabschnitt oder in einem Bauchabschnitt, umfassend zwei Klammerarme (10), die jeweils an einer Vorderseite (101) einen Halteabschnitt (2) zum Halten des zu haltenden Behälters (5, 5') aufweisen, und ein Vorspannelement (11) zum Vorspannen der Halteabschnitte (2) in eine vorgegebene Position, wobei bevorzugt die Halteabschnitte (2) der beiden Klammerarme (10) zueinander spiegelsymmetrisch ausgebildet sind, wobei
die Klammerarme (10) an einem den Halteabschnitten (2) gegenüberliegenden rückseitigen Endbereich (100) der Klammerarme (10) an einer gemeinsamen Schwenkachse (12) zueinander verschwenkbar aufgenommen sind,
**dadurch gekennzeichnet, dass**
das Vorspannelement (11) einstückig mit den Klammerarmen (10) ausgebildet ist.

2. Klammervorrichtung (1) gemäß Anspruch 1, **dadurch gekennzeichnet, dass** der Halteabschnitt (2) einen ersten Haltebereich (20) zum Ausbilden eines ersten Berührpunktes (21, 21') mit dem gehaltenen Behälter (5, 5`) und einen zweiten Haltebereich (23) zum Ausbilden eines zweiten Berührpunktes (24, 24') mit dem gehaltenen Behälter (5, 5`) aufweist, wobei bevorzugt der erste Haltebereich (20) eine erste Krümmung (22) aufweist und der zweite Haltebereich (23) eine zur ersten Krümmung (22) entgegengesetzt orientierte zweite Krümmung (25) aufweist.

3. Klammervorrichtung (1) gemäß Anspruch 2, **dadurch gekennzeichnet, dass** der erste Haltebereich (20) eine konvexe Krümmung (22) aufweist, und der zweite Haltebereich (23) eine konkave Krümmung (25) aufweist, und/oder dass die Krümmungen (22, 25) der Halteabschnitte (2) der beiden Klammerarme (10) in Bezug auf eine mittig zwischen den Klammerarmen verlaufenden Längsachse (13) entgegengesetzt orientiert sind.

4. Klammervorrichtung (1) gemäß einem der vorstehenden Ansprüche, **dadurch gekennzeichnet, dass** das Vorspannelement (11) als Federbügel ausgebildet ist, wobei das Vorspannelement (11) bevorzugt in Form eines sich von einem Klammerarm (10) zu dem anderen Klammerarm (10) erstreckenden Bogens ausgebildet ist, wobei bevorzugt das Vorspannelement (11) zwischen dem Halteabschnitt (2) und der Schwenkachse (12) an den Klammerarmen (10) angebunden ist, wobei sich das Vorspannelement (11) bevorzugt von seiner Anbindung an die Klammerarme (10) nach hinten erstreckt und die Klammerarme (10) umspannt, wobei bevorzugt das Vorspannelement (10) und die Klammerarme (10) sich im Wesentlichen in einer Ebene erstrecken.

5. Klammervorrichtung (1) gemäß einem der vorstehenden Ansprüche, **dadurch gekennzeichnet, dass** das die Klammerarme (10) jeweils einen Steuerabschnitt zur Interaktion mit einer Betätigungseinheit (3) zum aktiven Bewegen des jeweiligen Halteabschnitts (2) aufweisen, wobei bevorzugt der Steuerabschnitt zwischen dem Halteabschnitt (2) und der Schwenkachse (12) angeordnet ist, und/oder **dass** zumindest ein Klammerarm (10) ein Versteifungselement (18) zum Versteifen zumindest eines Teilbereiches des Klammerarms (10) aufweist.

6. Klammervorrichtung (1) gemäß dem vorstehenden Anspruch, **dadurch gekennzeichnet, dass** eine Betätigungseinheit (3) zum aktiven Bewegen der Halteabschnitte (2) gegen die Vorspannung vorgesehen ist, und/oder **dass** die Betätigungseinheit (3) derart ausgebildet ist, dass eine Verschiebung eines verschiebbaren Betätigungsglieds (30) der Betätigungseinheit (3) ein Schwenken der Klammerarme (10) bewirkt, und/oder **dass,** das Betätigungsglied (30) mit den Klammerarmen (10) jeweils über ein schwenkbar an dem Betätigungsglied (30) und schwenkbar an dem jeweiligen Klammerarm (10) angeordnetes Koppelglied (31) gekoppelt ist, oder dass das Betätigungsglied (30) zumindest einen Zahnstangenabschnitt umfasst und die Klammerarme (10) jeweils einen Verzahnungsabschnitt aufweisen, wobei jeder der beiden Klammerarme (10) mit seinem Verzahnungsabschnitt jeweils mit dem zumindest einen Zahnstangenabschnitt des Betätigungsglieds (30) gekoppelt ist, und/oder **dass** das Koppelglied (30) am jeweiligen Klammerarm (10) zwischen dem Halteabschnitt (2) und der Schwenkachse (12) angebunden ist.

7. Klammervorrichtung (1) gemäß Anspruch 6, **dadurch gekennzeichnet, dass** die Halteabschnitte (2) in einen vorgegebenen Abstand zueinander vorgespannt sind, wobei bevorzugt der vorgegebene Abstand einer Öffnungsposition der Halteabschnitte (2) entspricht und die Halteabschnitte (2) durch ein Schwenken der Klammerarme (10) gegen die Vorspannung in eine Schließposition bewegbar sind, oder der vorgegebene Abstand einer Schließposition der Halteabschnitte (2) entspricht und die Halteabschnitte (2) durch ein Schwenken der Klammerarme (10) in eine Öffnungsposition bewegbar sind, und/oder **dass** das Betätigungsglied (30) ein Interaktionselement zum Interagieren mit einer Vorgabevorrichtung zum Vorgeben der Position des Betätigungsglieds (30) aufweist, wobei das Interaktionselement bevorzugt in Form eines Gleitelements und/oder einer Rolle (34), bevorzugt ausgebildet zum Gleiten und/oder Abrollen auf einer Leitkurve, ausgebildet ist, wobei das Interaktionselement bevorzugt auf einer den Halteabschnitten (3) abgewandten Seite des Betätigungsglieds (30) angeordnet ist.

8. Behälterbehandlungsvorrichtung (6), umfassend eine Transportvorrichtung (60) zum Transportieren eines Behälters (5, 5'),
**dadurch gekennzeichnet, dass**
die Transportvorrichtung (60) zumindest eine Klammervorrichtung (1) gemäß einem der vorstehenden Ansprüche aufweist.

## Claims

1. Clamping device (1) for holding a container (5, 5') in a container handling device (6), preferably for holding a beverage container in a neck section or in a belly section, comprising two clamping arms (10) which each have, on a front side (101), a holding section (2) for holding the container (5, 5') to be held, and a prestressing element (11) for prestressing the holding sections (2) into a predetermined position, wherein preferably the holding sections (2) of the two clamping arms (10) are designed to be mirror-symmetrical with respect to one another, wherein
the clamping arms (10) are received at a rear end region (100) of the clamping arms (10) opposite the holding portions (2) so as to be pivotable relative to one another on a common pivot axis (12),
**characterised in that**
the prestressing element (11) is formed in one piece with the clamping arms (10).

2. Clamping device (1) according to claim 1, **characterised in that** the holding section (2) has a first holding region (20) for forming a first point of contact (21, 21') with the held container (5, 5') and a second holding region (23) for forming a second point of contact (24, 24 ') with the held container (5, 5'), wherein preferably the first holding region (20) has a first curvature (22) and the second holding region (23) has a second curvature (25) oriented opposite to the first curvature (22).

3. Clamping device (1) according to claim 2, **characterised in that** the first holding region (20) has a convex curvature (22) and the second holding region (23) has a concave curvature (25), and/or **in that** the curvatures (22, 25) of the holding sections (2) of the two clamping arms (10) are oriented in opposite directions with respect to a longitudinal axis (13) extending centrally between the clamping arms.

4. Clamping device (1) according to any one of the preceding claims, **characterised in that** the prestressing element (11) is designed as a spring clip, wherein the prestressing element (11) is preferably designed in the form of an arc extending from one clamping arm (10) to the other clamping arm (10), wherein preferably the prestressing element (11) is connected to the clamping arms (10) between the holding section (2) and the pivot axis (12), wherein preferably the prestressing element (11) extends rearwards from its connection to the clamping arms (10) and spans the clamping arms (10), wherein preferably the prestressing element (10) and the clamping arms (10) extend substantially in one plane.

5. Clamping device (1) according to any one of the preceding claims, **characterised in that** the clamping arms (10) each have a control section for interaction with an actuating unit (3) for actively moving the respective holding section (2), wherein preferably the control section is arranged between the holding section (2) and the pivot axis (12), and/or in that at least one clamping arm (10) has a stiffening element (18) for stiffening at least a partial region of the clamping arm (10).

6. Clamping device (1) according to the preceding claim, **characterised in that** an actuating unit (3) is provided for actively moving the holding sections (2) against the prestress, and/or **in that** the actuating unit (3) is designed in such a way that displacement of a displaceable actuating member (30) of the actuating unit (3) causes the clamping arms (10) to pivot, and/or **in that** the actuating member (30) is coupled to the clamping arms (10) in each case via a coupling member (31) arranged pivotably on the actuating member (30) and pivotably on the respective clamping arm (10), or **in that** the actuating member (30) comprises at least one toothed rack section and the clamping arms (10) each have a toothed section, wherein each of the two clamping arms (10) is coupled by its toothed section in each case to the at least one toothed rack section of the actuating member (30), and/or **in that** the coupling member (30) is attached to the respective clamping arm (10) between the holding section (2) and the pivot axis (12).

7. Clamping device (1) according to claim 6, **characterised in that** the holding sections (2) are prestressed at a predetermined distance from one another, wherein preferably the predetermined distance corresponds to an open position of the holding sections (2) and the holding sections (2) can be moved into a closed position by pivoting the clamping arms (10) against the prestress, or the predetermined distance corresponds to a closed position of the holding sections (2) and the holding sections (2) can be moved into an open position by pivoting the clamping arms (10), and/or **in that** the actuating member (30) has an interaction element for interacting with a presetting device for presetting the position of the actuating member (30), wherein the interaction element is preferably in the form of a sliding element and/or a roller (34), preferably designed to slide and/or roll on a guide curve, wherein the interaction element is preferably arranged on a side of the actuating member (30) facing away from the holding sections (3).

8. Container handling device (6), comprising a transport device (60) for transporting a container (5, 5'),
**characterised in that**
the transport device (60) has at least one clamping device (1) according to any one of the preceding claims.

## Revendications

1. Dispositif de serrage (1) pour maintenir un récipient (5, 5') dans un dispositif de traitement de récipient (6), de préférence pour maintenir un récipient de boisson dans une section de col ou dans une section ventrale, comprenant deux bras de serrage (10) qui présentent respectivement au niveau d'un côté avant (101), une section de maintien (2) pour maintenir le récipient (5, 5') à maintenir, et un élément de précontrainte (11) pour précontraindre les sections de maintien (2) dans une position prédéterminée, dans lequel de préférence les sections de maintien (2) des deux bras de serrage (10) sont conçues à symétrie de miroir l'une par rapport à l'autre, dans lequel
les bras de serrage (10) sont reçus au niveau d'une zone d'extrémité arrière (100) des bras de serrage (10) opposée aux sections de maintien (2) de manière à pouvoir pivoter les uns par rapport aux autres sur un axe de pivotement commun (12),
**caractérisé en ce que**
l'élément de précontrainte (11) est formé d'une seule pièce avec les bras de serrage (10).

2. Dispositif de serrage (1) selon la revendication 1, **caractérisé en ce que** la section de maintien (2) présente une première zone de maintien (20) pour former un premier point de contact (21, 21') avec le récipient maintenu (5, 5') et une seconde zone de maintien (23) pour former un second point de contact (24, 24') avec le récipient maintenu (5, 5'), dans lequel la première zone de maintien (20) présente de préférence une première courbure (22) et la seconde zone de maintien (23) présente une seconde courbure (25) orientée de manière opposée à la première courbure (22).

3. Dispositif de serrage (1) selon la revendication 2, **caractérisé en ce que** la première zone de maintien (20) présente une courbure convexe (22) et la seconde zone de maintien (23) présente une courbure concave (25), et/ou que les courbures (22, 25) des sections de maintien (2) des deux bras de serrage (10) sont orientées dans des directions opposées par rapport à un axe longitudinal (13) s'étendant au centre entre les bras de serrage.

4. Dispositif de serrage (1) selon l'une des revendications précédentes, **caractérisé en ce que** l'élément de précontrainte (11) est réalisé sous forme de pince à ressort, dans lequel l'élément de précontrainte (11) est de préférence en forme d'arc s'étendant à partir d'un bras de serrage (10) à l'autre bras de serrage (10), dans lequel l'élément de précontrainte (11) est de préférence relié aux bras de serrage (10) entre la section de maintien (2) et l'axe de pivotement (12), dans lequel l'élément de précontrainte (11) s'étend de préférence vers l'arrière depuis sa liaison aux bras de serrage (10) et englobe les bras de serrage (10), dans lequel l'élément de précontrainte (10) et les bras de serrage (10) s'étendent de préférence sensiblement dans un plan.

5. Dispositif de serrage (1) selon l'une des revendications précédentes, **caractérisé en ce que** les bras de serrage (10) présentent chacun une section de commande pour interagir avec une unité d'actionnement (3) pour déplacer activement la section de maintien (2) respective, dans lequel la section de commande est de préférence disposée entre la section de maintien (2) et l'axe de pivotement (12), et/ou qu'au moins un bras de serrage (10) présente un élément de renforcement (18) pour rigidifier au moins une zone partielle du bras de serrage (10).

6. Dispositif de serrage (1) selon la revendication précédente, **caractérisé en ce qu**'il est prévu une unité d'actionnement (3) pour déplacer activement les sections de maintien (2) contre la précontrainte, et/ou **que** l'unité d'actionnement (3) est conçue de telle sorte qu'un déplacement d'un élément d'actionnement (30) mobile de l'unité d'actionnement (3) provoque un pivotement des bras de serrage (10), et/ou **que** l'élément d'actionnement (30) est couplé aux bras de serrage (10) respectivement par l'intermédiaire d'un élément de couplage (31) disposé de manière pivotante sur l'élément d'actionnement (30) et de manière pivotante sur le bras de serrage (10) respectif, ou que l'élément d'actionnement (30) comprend au moins une section de crémaillère et les bras de serrage (10) présentent respectivement une section de denture, dans lequel chacun des deux bras de serrage (10) est couplé avec sa section de denture respectivement à l'au moins une section de crémaillère de l'élément d'actionnement (30), et/ou **que** l'élément de couplage (30) est relié au bras de serrage (10) respectif entre la section de maintien (2) et l'axe de pivotement (12).

7. Dispositif de serrage (1) selon la revendication 6, **caractérisé en ce que** les sections de maintien (2) sont précontraintes à une distance prédéterminée les unes des autres, dans lequel la distance prédéterminée correspond de préférence à une position d'ouverture des sections de maintien (2) et les sections de maintien (2) peuvent être déplacées vers une position fermée par un pivotement des bras de serrage (10) contre la précontrainte, ou la distance prédéterminée correspond à une position fermée des sections de maintien (2) et les sections de maintien (2) peuvent être déplacées dans une position ouverte par un pivotement des bras de serrage (10), et/ou **que** l'élément d'actionnement (30) présente un élément d'interaction pour interagir avec un dispositif de spécification pour spécifier la position de l'élément d'actionnement (30), dans lequel l'élément d'interaction est de préférence réalisé sous la forme d'un élément coulissant et/ou d'un rouleau (34), de préférence conçu pour coulisser et/ou rouler sur une courbe de guidage, dans lequel l'élément d'interaction est de préférence disposé sur un côté de l'élément d'actionnement (30) opposé aux sections de maintien (3).

8. Dispositif de traitement de récipient (6), comprenant un dispositif de transport (60) pour transporter un récipient (5, 5'),
**caractérisé en ce que**
le dispositif de transport (60) présente au moins un dispositif de serrage (1) selon l'une des revendications précédentes.
